# EUROPÄISCHE PATENTANMELDUNG

(11) **EP 3 787 229 A1**
(43) Veröffentlichungstag der Anmeldung: **03.03.2021**
(21) Anmeldenummer: 19194909.8
(22) Anmeldetag: 02.09.2019
(51) Int. Cl.: H04L 12/24, H04L 12/26

(54) **VERFAHREN UND VORRICHTUNG ZUR AUTOMATISCHEN AUSWAHL VON ANALYSEKETTEN ZUR MERKMALSEXTRAKTION**

(71) Anmelder: Siemens Aktiengesellschaft, 80333 München (DE)
(72) Erfinder: Klos, Hans-Henning, 91249 Weigendorf (DE); Lavrik, Vladimir, 63303 Dreieich (DE); Paulitsch, Christoph, 76137 Karlsruhe (DE)

(57) **Zusammenfassung**

Computerimplementiertes Verfahren zur automatischen Auswahl von Analyseketten (4a-4e) zur Merkmalsextraktion, mit den Schritten: Bereitstellen (S1) von Anwendungsfällen (701-723), wobei den Anwendungsfällen (701-723) Werte für Klassifikationsparameter und Bewertungsgrößen für Analyseketten (4a-4e) zugeordnet sind; Ermitteln (S2) von Werten für Klassifikationsparameter für einen neuen Anwendungsfall (701-723); Ermitteln (S3) einer Ähnlichkeit des neuen Anwendungsfalls (701-723) mit den bestehenden Anwendungsfällen (701-723) anhand eines Vergleichs der für den neuen Anwendungsfall (701-723) ermittelten Werte der Klassifikationsparameter mit den Werten der Klassifikationsparameter, welche den bestehenden Anwendungsfällen (701-723) zugeordnet sind; und Auswählen (S4) einer Analysekette (4a-4e) anhand der ermittelten Ähnlichkeit und anhand der Bewertungsgrößen für die Analyseketten (4a-4e) .

## Beschreibung

Die Erfindung betrifft ein computerimplementiertes Verfahren und ein System zur automatischen Auswahl von Analyseketten zur Merkmalsextraktion. Die Erfindung betrifft insbesondere die automatische Auswahl von Analyseketten zur Merkmalsextraktion zur Untersuchung und Überwachung von Automatisierungssystemen mit Umrichtern.

In modernen Automatisierungssystemen müssen viele verschiedene Komponenten wie Maschinen, Umrichter, Sensoren und Steuerungssysteme miteinander wechselwirken. Darüber hinaus sind die Systeme häufig dynamisch angelegt, d.h. neue Komponenten können zugefügt werden oder entfernt oder zumindest deaktiviert werden.

Zur Untersuchung und Überwachung bestimmter Komponenten können Merkmale extrahiert werden, welche beispielweise den Zustand der Komponenten beschreiben. Aus der WO 2019/036219 A1 ist eine Diagnose von Turbinen bekannt, wobei Merkmale nach ihrer Wichtigkeit geordnet werden. Die US 2019/050465 A1 betrifft die Bewertung von Merkmalen unter Verwendung einer Vielzahl von Transformationen. Um eine Vektor-Teilmenge von Merkmalen auszuwählen, beschreibt die MX 2018/002954 A die Verwendung von multidisziplinären Multi-Modell-Frameworks. Eine Vorrichtung zum Auswählen von Merkmalsgrößen ist aus der WO 2018/235568 A1 bekannt. Diese Vorrichtung wählt Merkmalsgrößen unter Verwendung einer Ising-Maschine aus. Die Ising-Maschine bestimmt auf stochastische Weise den Wert einer binären Variablen, welche eine Objektfunktion minimiert oder maximiert. Iterative Merkmalsselektion auf Basis der Genauigkeit eines Voraussagemodells ist aus der US 2018/374104 A1 bekannt. Aus der CN 108921197 A ist die Bewertung von Merkmalen mit einer Informationszuwachsrate und einer symmetrischen Unsicherheit bekannt. Ein genetischer Schwarmintelligenz-Algorithmus wird in der CN 108875895 A auf eine Ausgangsmenge und auf wechselseitiges Informationswissen angewendet. Die US 2018/336298 A1 betrifft eine Hauptkomponentenanalyse zur Merkmalsextraktion. Aus der CN 108846338 A ist die Bestimmung einer optimalen Teilmenge unter Verwendung einer iterativen Abbruchbedingung mittels objektorientierten Random-Forest-Verfahren bekannt.

Die in bestimmten Komponenten zur Verfügung gestellten Ausgangssignale dienen häufig als Eingangswerte für Analysen anderer Komponenten. Um eine Analyse für eine Überwachung der Komponenten durchzuführen, können Analyseketten zur Auswertung von Signalen der Komponenten verwendet werden. Typischerweise werden die Analyseketten von Experten manuell erzeugt. Falls sich die Konfiguration der Komponenten ändert, muss eine neue Analysekette angelegt werden, was wiederum ein manuelles Eingreifen eines Experten erfordert. Hierbei erschwert sich die Veränderung bereits bestehender Analyseketten häufig durch eine unzureichende Spezifizierung, wodurch nicht ohne Weiteres erkannt werden kann, ob eine bereits bestehende Analysekette auch auf die geänderte Situation anwendbar ist. Falls bereits eine Vielzahl von Analyseketten angelegt wurde, ist darüber hinaus auch nicht ohne weiteres erkennbar, welche der Analyseketten auf die geänderte Situation am besten angewendet werden kann.

Es ist daher eine Aufgabe, die Auswahl von Analyseketten insbesondere in dynamischen Kontexten zu vereinfachen und zu verbessern.

Diese Aufgabe wird durch ein computerimplementiertes Verfahren zur automatischen Auswahl von Analyseketten zur Merkmalsextraktion mit den Merkmalen des Patentanspruchs 1 und ein System zur automatischen Auswahl von Analyseketten zur Merkmalsextraktion mit den Merkmalen des Patentanspruchs 13 gelöst. Weiter stellt die Erfindung ein Computerprogrammprodukt mit ausführbarem Programmcode mit den Merkmalen des Patentanspruchs 14 und ein nichtflüchtiges, computerlesbares Speichermedium mit ausführbarem Programmcode mit den Merkmalen des Patentanspruchs 15 bereit.

Gemäß einem ersten Aspekt betrifft die Erfindung demnach ein computerimplementiertes Verfahren zur automatischen Auswahl von Analyseketten zur Merkmalsextraktion. Eine Vielzahl von Anwendungsfällen wird bereitgestellt, wobei den Anwendungsfällen Werte für Klassifikationsparameter zugeordnet sind. Den Anwendungsfällen sind weiter Bewertungsgrößen für Analyseketten aus einer Vielzahl von Analyseketten zugeordnet. Für einen neuen Anwendungsfall werden Werte für Klassifikationsparameter ermittelt. Eine Ähnlichkeit des neuen Anwendungsfalls mit den Anwendungsfällen der Vielzahl von Anwendungsfällen wird anhand eines Vergleichs der für den neuen Anwendungsfall ermittelten Werte der Klassifikationsparameter mit den Werten der Klassifikationsparameter, welche den Anwendungsfällen der Vielzahl von Anwendungsfällen zugeordnet sind, ermittelt. Aus der Vielzahl von Analyseketten wird anhand der ermittelten Ähnlichkeit des neuen Anwendungsfalls mit den Anwendungsfällen der Vielzahl von Anwendungsfällen und anhand der Bewertungsgrößen für die Analyseketten, welche den Anwendungsfällen der Vielzahl von Anwendungsfällen zugeordnet sind, eine Analysekette aus der Vielzahl von Analyseketten ausgewählt.

Gemäß einem zweiten Aspekt betrifft die Erfindung ein System zur automatischen Auswahl von Analyseketten zur Merkmalsextraktion mit einer Schnittstelle und einer Recheneinheit. Die Schnittstelle stellt eine Vielzahl von Anwendungsfällen bereit, wobei den Anwendungsfällen Werte für Klassifikationsparameter zugeordnet sind. Den Anwendungsfällen sind Bewertungsgrößen für Analyseketten aus einer Vielzahl von Analyseketten zugeordnet. Die Recheneinheit ermittelt Werte für Klassifikationsparameter für einen neuen Anwendungsfall. Die Recheneinheit ermittelt weiter eine Ähnlichkeit des neuen Anwendungsfalls mit den Anwendungsfällen der Vielzahl von Anwendungsfällen anhand eines Vergleichs der für den neuen Anwendungsfall ermittelten Werte der Klassifikationsparameter mit den Werten der Klassifikationsparameter, welche den Anwendungsfällen der Vielzahl von Anwendungsfällen zugeordnet sind. Die Recheneinheit wählt aus der Vielzahl von Analyseketten eine Analysekette aus, wobei die Recheneinheit die ermittelten Ähnlichkeit des neuen Anwendungsfalls mit den Anwendungsfällen der Vielzahl von Anwendungsfällen und die Bewertungsgrößen für die Analyseketten, welche den Anwendungsfällen der Vielzahl von Anwendungsfällen zugeordnet sind, berücksichtigt.

Die Erfindung erlaubt eine automatische Auswahl von Anwendungsfällen aus einer Vielzahl von Anwendungsfällen, ohne dass menschliches Eingreifen durch einen Experten erforderlich ist. Indem ein neuer Anwendungsfall mit bereits bestehenden Anwendungsfällen verglichen wird, wobei eine Ähnlichkeit der Anwendungsfälle quantitativ ausgewertet wird, ist es möglich, denjenigen bereits bestehenden Anwendungsfall zu ermitteln, welcher mit dem neuen Anwendungsfall die größten Übereinstimmungen aufweist. Die Anwendungsfälle werden hierzu einheitlich klassifiziert und quantifiziert, sodass ein automatischer Vergleich der Anwendungsfälle durchgeführt werden kann.

Im Rahmen dieser Erfindung ist unter einer Analysekette zur Merkmalsextraktion (englisch: feature extraction pipeline) eine Art der Auswertung von Eingangsdaten zu verstehen, wobei Merkmale aus den Eingangsdaten extrahiert werden. Die Analysekette zur Merkmalsextraktion umfasst typischerweise eine Vielzahl von Schritten, welche sequenziell oder auch zumindest teilweise parallel durchlaufen werden. Jeder einzelne Schritt kann mittels Software und/oder Hardware implementiert werden. Mögliche Schritte umfassen das Umformen oder Bearbeiten der Daten, etwa durch Skalieren, Samplen oder Filtern der Daten. Das Filtern der Daten kann beispielsweise unter Verwendung von Hochpassfiltern, Tiefpassfiltern oder Bandpassfiltern erfolgen. Weiter können die Schritte eine Auswertung oder Analyse der Daten umfassen, etwa mittels Fourier-Transformation, Laplace-Transformation und/oder Erkennen und Auswerten von Spitzen im Signalverlauf. Merkmale können elektronische Repräsentationen von physikalischen oder chemischen Größen umfassen, etwa Temperaturen, Drücke, Geschwindigkeiten oder Beschleunigungen. Extrahierte Merkmale können auch Zustände eines Geräts oder mehrerer Geräte betreffen, etwa das Vorliegen von Fehlern. Diese Zustände können auch quantifiziert werden, indem etwa dem Fehler ein Fehlerwert als extrahiertes Merkmal zugeordnet wird, welcher die Schwere des Fehlers angibt. Die extrahierten Merkmale können als Ausgangswerte ausgegeben werden. Die extrahierten Merkmale können auch als Zwischenresultate in Zwischenschritten der Analysekette zur Merkmalsextraktion erzeugt werden und können als Eingangsgrößen in weiteren Schritten der Analysekette zur Merkmalsextraktion weiter ausgewertet werden. In jedem Schritt der Analysekette können aus einer oder aus mehreren Eingangsgrößen eine oder mehrere Ausgangsgrößen berechnet werden.

Im Rahmen dieser Erfindung ist unter einem Anwendungsfall (englisch: use case) eine bestimmte Untersuchungs- oder Überwachungsaufgabe eines Ereignisses oder eines bestimmten Zustandes einer zu untersuchenden Komponente, insbesondere eines Automatisierungssystems zu verstehen. Bei einem "neuen Anwendungsfall" kann es sich insbesondere um die Erkennung einer geänderten Konfiguration eines Automatisierungssystems oder die Fehlererkennung einer Komponente eines Automatisierungssystems handeln. Ein "neuer Anwendungsfall" kann sich von den bereits bestehenden Anwendungsfällen durch neu hinzugefügte, entfernte oder veränderte Komponenten unterscheiden. Der "neue Anwendungsfall" kann auch einer bestimmten Komponente, insbesondere einer neu hinzugefügten Komponente zugeordnet sein. Beispielsweise kann bei dem "neuen Anwendungsfall" ein Umrichter (Inverter) zu dem Automatisierungssystem neu hinzugefügt worden sein. Ein Anwendungsfall wird durch bestimmte Parameter oder Werte gekennzeichnet, wozu die Klassifikationsparameter und die Bewertungsgrößen zählen. Unterschiedlichen Anwendungsfällen können sich zumindest teilweise überschneidende Klassifikationsparameter zugeordnet sein, wobei sich die unterschiedlichen Anwendungsfälle in zumindest einigen der Werte, welche den Klassifikationsparametern zugeordnet sind, unterscheiden können.

Gemäß einer bevorzugten Ausführungsform des computerimplementierten Verfahrens wird für den neuen Anwendungsfall eine Merkmalsextraktion anhand der ausgewählten Analysekette durchgeführt. Insbesondere kann eine neu hinzugefügte Komponente, etwa ein Umrichter, mittels der ausgewählten Analysekette analysiert werden.

Gemäß einer bevorzugten Ausführungsform des computerimplementierten Verfahrens wird die Vielzahl von Anwendungsfällen anhand des neuen Anwendungsfalls aktualisiert. Die Anzahl der Anwendungsfälle kann hierbei konstant bleiben oder sich auch verändern. So können die bestehenden Anwendungsfälle aktualisiert werden und/oder es kann der neue Anwendungsfall zu der Vielzahl von Anwendungsfällen hinzugefügt werden. Die Erfindung erlaubt dadurch eine dynamische und automatische Aktualisierung der Anwendungsfälle, ohne dass ein manuelles Eingreifen eines Experten erforderlich wäre.

Gemäß einer bevorzugten Ausführungsform des computerimplementierten Verfahrens wird der neue Anwendungsfall zu der Vielzahl von Anwendungsfällen hinzugefügt, falls die Ähnlichkeit des neuen Anwendungsfalls mit den Anwendungsfällen der Vielzahl von Anwendungsfällen ein vorgegebenes Ähnlichkeitskriterium nicht erfüllt. Falls sich der neue Anwendungsfall also hinreichend von den bereits bestehenden Anwendungsfällen unterscheidet, wird die Vielzahl von Anwendungsfällen unter Hinzufügung des neuen Anwendungsfalls aktualisiert. Die Zahl der Anwendungsfälle kann dadurch stetig zunehmen. Beim Hinzufügen weiterer neuer Anwendungsfälle kann dadurch auf eine größere Referenzmenge von bereits bestehenden Anwendungsfällen zurückgegriffen werden, wodurch gegebenenfalls bessere Analyseketten ausgewählt werden können.

Gemäß einer bevorzugten Ausführungsform des computerimplementierten Verfahrens wird der neue Anwendungsfall mit mindestens einem Anwendungsfall der Vielzahl von Anwendungsfällen zusammengeführt, falls die Ähnlichkeit des neuen Anwendungsfalls mit dem mindestens einen Anwendungsfall der Vielzahl von Anwendungsfällen ein vorgegebenes Ähnlichkeitskriterium erfüllt. Die bereits bestehenden Anwendungsfälle werden somit anhand des neuen Anwendungsfalls aktualisiert. Durch diese Maßnahmen kann verhindert werden, dass die Referenzmenge der Anwendungsfälle zu stark anwächst und eine große Vielzahl von relativ ähnlichen Anwendungsfällen umfasst. Indem ähnliche Anwendungsfälle zusammengefasst werden, kann dadurch auch der Vergleich neuer Anwendungsfälle mit den bereits bestehenden Anwendungsfällen schneller durchgeführt werden, da eine geringere Anzahl von Vergleichen erforderlich ist.

Gemäß einer bevorzugten Ausführungsform des computerimplementierten Verfahrens erfolgt das Zusammenführen des neuen Anwendungsfalls mit dem mindestens einen Anwendungsfall der Vielzahl von Anwendungsfällen unter Verwendung eines Adapters. Mithilfe des Adapters werden Klassifikationsparameter eines zusammengeführten Anwendungsfalls anhand der Klassifikationsparameter des neuen Anwendungsfalls und anhand der Klassifikationsparameter des mindestens einen Anwendungsfalls der Vielzahl von Anwendungsfällen erzeugt. Der Adapter erlaubt es somit Anwendungsfälle miteinander zu verbinden, welche sich in ihrer Spezifizierung zumindest teilweise voneinander unterscheiden. Klassifikationsparameter mit unterschiedlichen Werten können gemäß den Vorgaben des Adapters kombiniert werden. Der neue Anwendungsfall kann hierbei sämtliche Klassifikationsparameter umfassen, auch wenn diese nur für einige der Anwendungsfälle, welche kombiniert werden sollen, angelegt worden sind. Die Menge der Klassifikationsparameter eines neuen kombinierten Anwendungsfalls kann somit die Vereinigungsmenge der Klassifikationsparameter sämtlicher kombinierter Anwendungsfälle sein.

Gemäß einer bevorzugten Weiterbildung des computerimplementierten Verfahrens sind die Anwendungsfälle der Vielzahl von Anwendungsfällen dezentral verteilt gespeichert. Durch die dezentrale Verwaltung können mittels intelligenter Konfigurationen für die Übertragung hohe und stabile Datenübertragungen gewährleistet werden. Die Kommunikation ist auch beim Ausfall von Verbindungen weiter möglich. Weiter vereinfacht sich das Hinzufügen zusätzlicher Komponenten beziehungsweise entsprechender Anwendungsfälle.

Gemäß einer bevorzugten Weiterbildung des computerimplementierten Verfahrens können die Anwendungsfälle auch zumindest teilweise zentral gespeichert sein. Eine zentrale Speicherung kann insbesondere aus Sicherheitsgründen erforderlich sein. Die Anwendungsfälle können in einem Speicher abgelegt sein, wobei die Recheneinheit über die Schnittstelle auf den Speicher zugreift. Informationen über den Inhalt der Bibliothek können in diesem Fall unter Verwendung von Hash-Werten mitgeteilt werden, um maximale Sicherheit zu gewährleisten.

Gemäß einer bevorzugten Weiterbildung des computerimplementierten Verfahrens umfassen die Klassifikationsparameter einen Zentralisierungsgrad, welcher von einer Stellung eines Geräts des Anwendungsfalls in einer Automatisierungshierarchie abhängt. Der Zentralisierungsgrad kann anhand von Anlagenstrukturinformationen eines digitalen Regelungssystems festgelegt werden. Anhand der Anlagenstrukturinformationen können die Analyseketten zur Merkmalsextraktion anhand der Position der betreffenden Komponenten in der Automatisierungshierarchie klassifiziert werden. Die Anwendungsfälle können in zentrale und dezentrale Anwendungsfälle unterteilt werden, wobei jeweils noch feingliedrigere Unterteilungen möglich sind. Die Hierarchie der Anwendungsfälle kann beispielsweise anhand eines CAX-Modells ermittelt werden, welches eine einfache Visualisierung der Entscheidungsprozedur ermöglicht. Hierbei umfasst CAX insbesondere CAD (englisch: computer aided design), CAE (computer aided engineering, CAM (englisch: computer aided manufacturing) und dergleichen.

Gemäß einer bevorzugten Weiterbildung des computerimplementierten Verfahrens umfassen die Klassifikationsparameter eine Merkmalsbewertungszahl. Die Merkmalsbewertungszahl kann anhand von textlichen Beschreibungen der Komponenten des Systems und anhand von Keywords erstellt werden.

Gemäß einer bevorzugten Weiterbildung des computerimplementierten Verfahrens umfassen die Klassifikationsparameter einen Signaltyp von Signalen des Anwendungsfalls. Die Ähnlichkeit von Signaltypen kann anhand von Korrelationsfunktionen bestimmt werden. Beispielweise kann eine Signalkorrelation im Zeitbereich oder im Frequenzbereich berechnet werden. Weiter kann eine Autokorrelation eines Signals im Zeitbereich oder Frequenzbereich ermittelt werden und die entsprechenden Werte können verglichen werden. Weiter ist es möglich, einen Vergleich der Dynamik durchzuführen, unter Verwendung von Key-Signal-Charakteristiken, etwa eines Cutoffs einer Transferfunktion, einer Resonanz- oder einer Antiresonanzfrequenz.

Gemäß einer bevorzugten Weiterbildung des computerimplementierten Verfahrens kann ein gesamter Ähnlichkeitswert zur Quantifizierung einer Ähnlichkeit des neuen Anwendungsfalls mit den bestehenden Anwendungsfällen anhand eines Entscheidungsbaumes oder anhand von Clusterbildung einzelner Ähnlichkeitswerte, welche einzelne Klassifikationsparameter betreffen, ermittelt werden.

Gemäß einer bevorzugten Weiterbildung des computerimplementierten Verfahrens umfassen die Klassifikationsparameter eine Gerätebeschreibung eines Geräts des Anwendungsfalls. Ein Vergleich der Gerätebeschreibung kann anhand eines Textvergleichs oder eines Vergleichs von Keywords erfolgen, wobei die Keywords den Anwendungsfällen zugeordnet sind, um das Gerät zu beschreiben.

Gemäß einer bevorzugten Weiterbildung des computerimplementierten Verfahrens betrifft der neue Anwendungsfall ein zu einem Automatisierungssystem hinzugefügtes oder hinzuzufügendes Gerät. Das Automatisierungssystem ändert sich somit dynamisch und die Anzahl der Anwendungsfälle ändert sich durch die sich verändernde Struktur des Automatisierungssystems.

Gemäß einer bevorzugten Weiterbildung des computerimplementierten Verfahrens ist das zu dem Automatisierungssystem hinzugefügte oder hinzuzufügende Gerät ein Umrichter. Aufgrund großer Schwankungen von Umrichterparametern der Umrichter und aufgrund verschiedener Kombinationen der Umrichterparameter, welche sich für verschiedene Anwendungsfälle unterscheiden können, ist die bekannte Auswertung anhand von Rohdaten und Heuristiken, welche von Experten ausgewählt werden, schwierig oder nicht anwendbar. Indem gemäß der Erfindung die Anwendungsfälle in einem abstrakten Modell anhand der Klassifikationsparameter miteinander verglichen werden können, kann beim Hinzufügen des Umrichters auf manuelles Eingreifen von Experten zur Anpassung der Auswertungen für verschiedene Anwendungsfälle verzichtet werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Es zeigen:
- FIG 1: ein schematisches Blockschaltbild eines Systems zur automatischen Auswahl von Analyseketten zur Merkmalsextraktion gemäß einer Ausführungsform der Erfindung;
- FIG 2: eine schematische Darstellung einer beispielhaften Analysekette zur Merkmalsextraktion;
- FIG 3: schematische Darstellungen weiterer beispielhafter Analyseketten zur Merkmalsextraktion;
- FIG 4: Signalverläufe für eine Erkennung eines Lockerungszustandes eines Transportbands;
- FIG 5: beispielhafte Merkmale, welche anhand der in FIG 4 dargestellten Signalverläufe extrahiert werden;
- FIG 6: eine schematische Illustration einer Klassifikation eines Lockerungszustandes des Transportbandes;
- FIG 7: eine schematische Darstellung eines Automatisierungssystems mit einer verteilten Bibliothek;
- FIG 8: einen Teil eines Automatisierungssystems zur Erläuterung eines Zentralisierungsgrades;
- FIG 9: eine hierarchische Anordnung von Komponenten eines Automatisierungssystem;
- FIG 10: eine Illustration eines Vergleichs eines neuen Anwendungsfalls mit bereits bestehenden Anwendungsfällen;
- FIG 11: eine Einordnung eines Anwendungsfalls anhand der entsprechenden Bewertungsgrößen für zwei Analyseketten;
- FIG 12: eine schematische Darstellung eines Automatisierungssystems mit einer verteilten Bibliothek mit einem neuen Gerät, welches dem Automatisierungssystem hinzugefügt werden soll;
- FIG 13: eine schematische Darstellung des in FIG 12 illustrierten Automatisierungssystems nach dem Hinzufügen des neuen Geräts;
- FIG 14: eine schematische Darstellung eines Ähnlichkeitsvergleichs eines neuen Anwendungsfalls mit bereits bestehenden Anwendungsfällen;
- FIG 15: eine schematische Illustration einer Kombination eines neuen Anwendungsfalls mit einem bestehenden Anwendungsfall zu einem kombinierten Anwendungsfall mithilfe eines Adapters;
- FIG 16: eine schematische hierarchische Anordnung von Komponenten eines Automatisierungssystems;
- FIG 17: ein Flussdiagramm eines computerimplementierten Verfahrens zur automatischen Auswahl von Analyseketten zur Merkmalsextraktion gemäß einer Ausführungsform der Erfindung;
- FIG 18: ein schematisches Blockdiagramm eines Computerprogrammprodukts gemäß einer Ausführungsform der Erfindung; und
- FIG 19: ein schematisches Blockdiagramm eines nichtflüchtigen, computerlesbaren Speichermediums gemäß einer Ausführungsform der Erfindung.

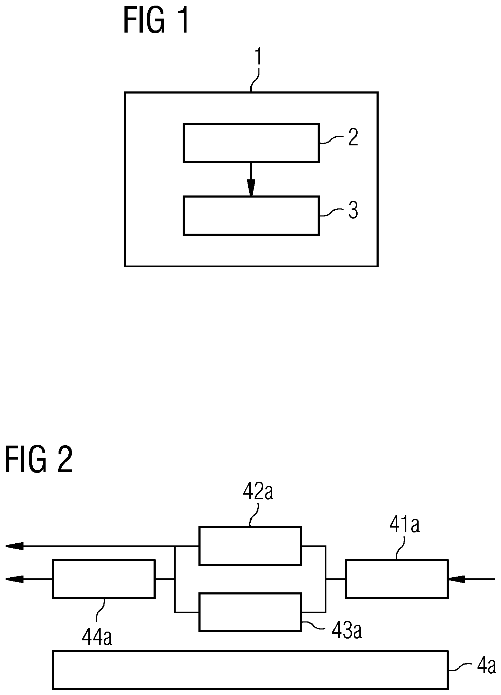

FIG 1 zeigt ein schematisches Blockschaltbild eines Systems 1 zur automatischen Auswahl von Analyseketten zur Merkmalsextraktion. Das System 1 umfasst eine Schnittstelle 2 über welche eine Vielzahl von Anwendungsfällen bereitgestellt wird. Jedem Anwendungsfall sind Werte für Klassifikationsparameter zugeordnet. Die Schnittstelle 2 kann zur Eingabe und Ausgabe von Daten ausgebildet sein und kann beispielsweise WLAN-, Bluetooth-, Profibus-, Ethernet-Schnittstellen oder ähnliches umfassen. Die Schnittstelle kann auch zur Verbindung mit elektrischen oder optischen Kabeln ausgestaltet sein.

Die Anwendungsfälle umfassen Signale, Merkmale (Features) und Klassifizierungen. Die Merkmale werden anhand der Signale unter Verwendung einer Analysekette zur Merkmalsextraktion (englisch: feature extraction pipeline) extrahiert. Die Analyseketten zur Merkmalsextraktion werden im Hinblick auf einen realen Anwendungsfall und eine Maschine oder Komponente einer Industrieanlage oder eines Automatisierungssystems entwickelt. Die Klassifizierung erfolgt anhand der ermittelten Merkmale. Etwa kann im Rahmen der Klassifizierung ein bestimmter Betriebszustand oder ein Fehlerzustand der Maschine oder der Komponente ermittelt werden.

Beispiele für Maschinen oder Komponenten eines Gepäckbeförderungssystems an Flughäfen sind Motoren, Pumpen, Kippvorrichtungen und Bänder. Beispielhafte Eingangsdaten umfassen ein Drehmoment, einen Strom, eine Position und eine Geschwindigkeit. Beispielhafte Transformationsverfahren, welche in einer Analysekette zur Merkmalsextraktion zur Anwendung kommen können, umfassen Fast-Fourier-Transformationen, Short-Time-Fourier-Transformationen, das Bilden von Durchschnittswerten, Maximal- oder Minimalwerten, Autoencoder-Verfahren, Rolling-Window-Analysen, Skalierungen, Entscheidungsbaumanalysen (englisch: decision tree analysis, DTA), Trigger, Anwendung von Fensterfunktionen (englisch: windowing), Filter, Veränderung der Abtastung (englisch: Resampling), Histogramm-Auswertung und Bestimmen von Perzentilen.

Die Klassifikationsparameter umfassen beispielweise einen Zentralisierungsgrad, welcher von einer Stellung eines Geräts des Anwendungsfalls in einer Automatisierungshierarchie abhängt. Ein weiterer möglicher Parameter ist eine Merkmalsbewertungszahl. Weiter können die Klassifikationsparameter einen Signaltyp von Signalen des Anwendungsfalls umfassen. Die Klassifikationsparameter können weiter eine Gerätebeschreibung eines Geräts des Anwendungsfalls umfassen.

Unter "Werten für Klassifikationsparameter" können allgemein binär speicherbare Werte verstanden werden, also neben numerischen Werten insbesondere auch Textbeschreibungen oder Keywords.

Das System 1 zur automatischen Auswahl von Analyseketten zur Merkmalsextraktion umfasst weiter eine Recheneinheit 3, welche Software- und/oder Hardwarekomponenten umfassen kann, etwa CPUs (englisch: central processing unit), GPUs (englisch: graphics processing unit), Mikrokontroller, integrierte Schaltkreise (englisch: integrated circuits), ASICs (englisch: application-specific integrated circuits), FPGAs (englisch: field programmable gate array) oder dergleichen. Die Recheneinheit 3 kann weiter einen flüchtigen oder nichtflüchtigen Speicher aufweisen, etwa eine Festplatte, eine Speicherkarte oder dergleichen.

Die Recheneinheit 3 ermittelt für einen neuen Anwendungsfall Werte für die Klassifikationsparameter.

FIG 2 zeigt eine schematische Darstellung einer beispielhaften Analysekette 4a zur Merkmalsextraktion. Die Analysekette 4a zur Merkmalsextraktion empfängt Eingangsdaten, welche mittels eines Präprozessors 41a vorverarbeitet werden. Die Eingangsdaten können beispielsweise Sensordaten umfassen, welche bestimmte Eigenschaften oder Parameter der Maschine oder Komponente beschreiben. Weiter umfasst die beispielhafte Analysekette 4a zur Merkmalsextraktion einen ersten Merkmalsextraktor 42a und einen zweiten Merkmalsextraktor 43a, welche jeweils die von dem Präprozessor 41a vorverarbeiteten Daten als Eingangsdaten empfangen und daraus Merkmale extrahieren. Die extrahierten Merkmale können als Ausgangsdaten der Analysekette 4a zur Merkmalsextraktion ausgegeben werden. Weiter dienen die von dem ersten Merkmalsextraktor 42a und dem zweiten Merkmalsextraktor 43a extrahierten Merkmale als Eingangsgrößen für einen dritten Merkmalsextraktor 44a, welcher ebenfalls Merkmale extrahiert und diese als Ausgangsdaten der Analysekette 4a zur Merkmalsextraktion ausgibt. Die gezeigte Anordnung ist nur beispielhaft zu verstehen. So kann die Analysekette 4a zur Merkmalsextraktion eine beliebige Vielzahl von seriell oder parallel verschalteten Merkmalsextraktoren und/oder weiteren Komponenten zur Signalverarbeitung umfassen. Die weiteren Komponenten können insbesondere Filter, Sampler oder Skalierer umfassen. Die von den Merkmalsextraktoren extrahierten Merkmale können zumindest teilweise ausgegeben und/oder zumindest teilweise von weiteren Komponenten der Analysekette 4a zur Merkmalsextraktion weiterverarbeitet werden.

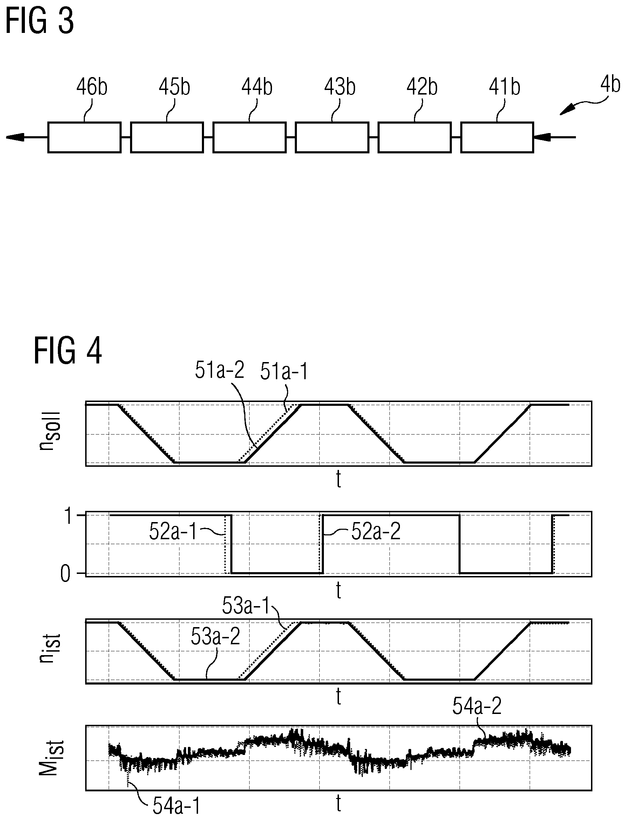

FIG 3 zeigt schematische Darstellungen einer weiteren beispielhaften Analysekette 4b zur Merkmalsextraktion für Gepäckbeförderungssysteme an Flughäfen, bei welchen Trays über Transportbänder geführt werden.

Eine Analysekette 4b ist dem Transportband des Gepäckbeförderungssystems zugeordnet. Als Eingangsgrößen dienen eine Drehzahl, eine Position und ein Drehmomentwert, welche von an dem Transportband angeordneten Sensoren ermittelt werden. Ein erstes Analysekettenelement 41b vergleicht das Drehmoment mit einem Schwellenwert und dient als Trigger. Wird der Schwellenwert erreicht, führt ein zweites Analysekettenelement 42b ein Resampling der Eingangsgrößen durch. Ein drittes Analysenkettenelement 43b ermittelt ein bestimmtes Fenster von einer vorgegebenen Messpunktanzahl der von dem zweiten Analysekettenelement 42b bearbeiteten Größen. Ein viertes Analysekettenelement 44b transformiert die von dem dritten Analysekettenelement 43b bearbeiteten Größen mittels einer schnellen Fourier-Transformation (englisch: Fast-Fourier-Transformation). Ein fünftes Analysekettenelement 45b skaliert die von dem vierten Analysekettenelement 44b bearbeiteten Größen. Ein sechstes Analysekettenelement 46b ermittelt anhand der von dem fünften Analysekettenelement 45b bearbeiteten Größen und unter Zuhilfenahme eines Modells, ob sich das Transportband gelockert hat.

FIG 4 zeigt beispielhafte Signalverläufe für eine Erkennung eines Lockerungszustandes eines Transportbands. In der ersten Zeile ist der zeitliche Verlauf eines Drehzahl-Sollwertes n_soll nach einer erfolgten Filterung für ein gespanntes Band 51a-1 und für ein gelockertes Band 51a-2 illustriert. In der zweiten Zeile ist ein zeitlicher Verlauf eines entsprechenden Digitalwerts für das gespannte Band 52a-1 und das gelockertes Band 52a-2 illustriert. In der dritten Zeile ist ein zeitlicher Verlauf eines ungeglätteten Drehzahl-Istwerts n_ist für das gespannte Band 53a-1 und für das gelockerte Band 53a-2 illustriert. Die vierte Spalte zeigt den zeitlichen Verlauf eines Drehmoment-Istwertes M ist für das gespannte Band 54a-1 und für das gelockerte Band 54a-2. Die in FIG 4 illustrierten Signalverläufe dienen als Eingangsgrößen für die erste Analysekette 4b zur Merkmalsextraktion.

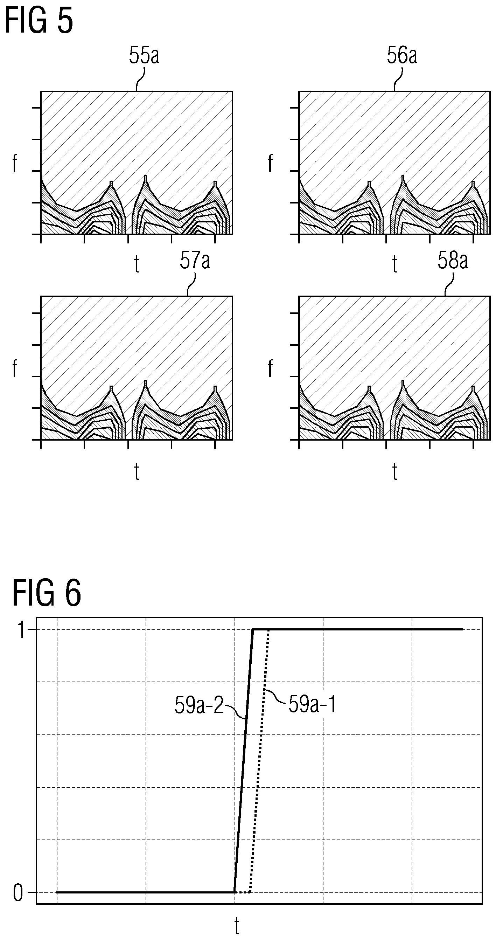

FIG 5 zeigt beispielhafte Merkmale, welche anhand der in FIG 4 dargestellten Signalverläufe mittels der ersten Analysekette 4b zur Merkmalsextraktion extrahiert werden. In der oberen Zeile werden eine erster zeitlicher Frequenzverlauf 55a und ein zweiter zeitlicher Frequenzverlauf 56a für ein gespanntes Band illustriert. In der unteren Zeile werden ein erster zeitlicher Frequenzverlauf 57a und ein zweiter zeitlicher Frequenzverlauf 58a für ein gelockertes Band illustriert. In diesem Fall sind also die Amplituden bei Frequenzen f die von der ersten Analysekette 4b extrahierten Merkmale.

FIG 6 zeigt eine schematische Illustration einer Klassifikation eines Lockerungszustandes des Transportbandes anhand der in FIG 5 gezeigten Merkmale. Nimmt die in FIG 6 gezeigte Klassifizierungsfunktion einen Wert gleich 1 an, ist das Transportband zu stark gespannt. Ist der Wert gleich 0, ist das Transportband zu locker. Illustriert sind vorhergesagte Werte 59a-1 und der tatsächlich eingestellte Zustand 59a-2 für mehrere Versuche.

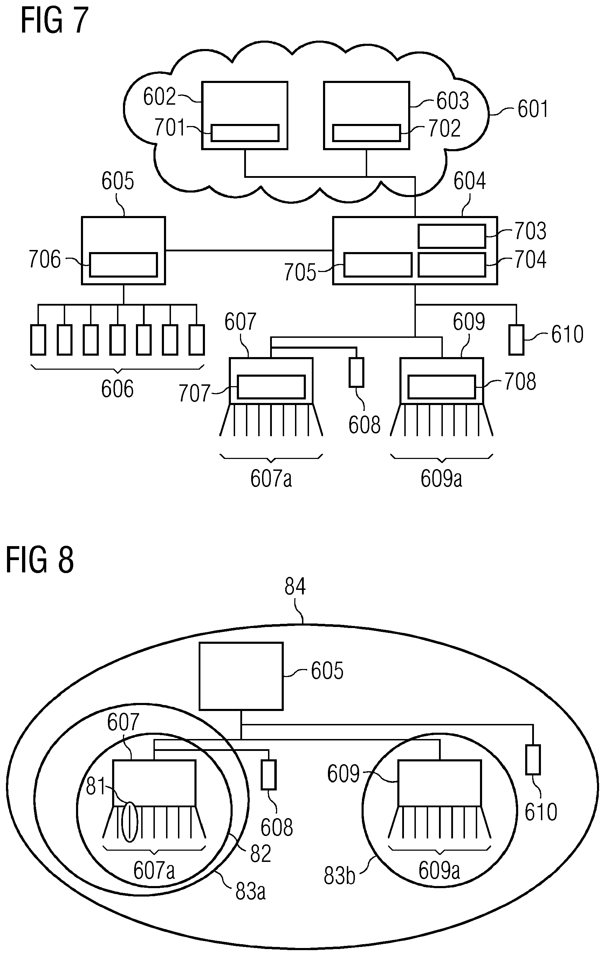

FIG 7 zeigt eine schematische Darstellung eines Automatisierungssystems mit einer verteilten Bibliothek. Das Automatisierungssystem umfasst einen verteilten nicht-lokalen Rechnerverbund (Cloud) 601 mit einem Analyseserver 602 und einer ersten Anwendungsfallbeschreibung 701, sowie einem Datenserver 603 und einer zweiten Anwendungsfallbeschreibung 702. Ein Edgegerät 604 ist mit der Cloud 601 verbunden und umfasst eine dritte Anwendungsfallbeschreibung 703, eine vierte Anwendungsfallbeschreibung 704 und eine fünfte Anwendungsfallbeschreibung 705. Eine speicherprogrammierbare Steuerung (englisch: programmable logic controller, PLC) 605 ist mit dem Edgegerät 604 verbunden und umfasst eine sechste Anwendungsfallbeschreibung 706. Die speicherprogrammierbare Steuerung ist mit ersten Sensoren 606 verbunden. Das Edgegerät 604 ist weiter mit einem ersten Umrichter (Inverter) 607 verbunden, welcher eine siebte Anwendungsfallbeschreibung 707 umfasst und erste Umrichtersignale 607a empfängt. Das Edgegerät 604 ist weiter mit einem zweiten Umrichter 609 verbunden, welche eine achte Anwendungsfallbeschreibung 708 umfasst und zweite Umrichtersignale 609a empfängt. Weiter sind ein zweiter Sensor 608 und ein dritter Sensor 610 zwischen dem Edgegerät 604 und den Umrichtern 607, 609 angeordnet.

Die dezentrale Speicherung der Anwendungsfälle in einer verteilten Bibliothek ermöglicht es bestimmten Anwendern, wie Domain-Experten, dezentral am Edgegerät 604 auf die Bibliothek zuzugreifen, während andere Benutzer, etwa Datenanalysten, über die Cloud bzw. das Netzwerk 601 auf die Daten zugreifen, sodass Sicherheits- und Systemperformance-Anforderungen gleichzeitig erfüllt sein können.

FIG 8 zeigt ein Teil eines Automatisierungssystems. Der Zentralisierungsgrad, welcher einem Anwendungsfall zugeordnet wird, wird anhand von Anlagenstrukturinformationen eines digitalen Regelungssystems festgelegt. Analyseketten zur Merkmalsextraktion werden unterschiedlich klassifiziert, je nachdem ob sie anhand von einzelnen Umrichtersignalen 81 eines Umrichters 607, anhand von mehreren Daten 82 des Umrichters 607, anhand von Umrichtersignalen 83a, 83b mehrerer Umrichter 607, 609, oder zusätzlich anhand von anderen Signalen 84, welche nicht von Umrichtern 607, 609 stammen, bestimmt werden. Ein Anwendungsfall wird als "dezentral" klassifiziert, falls die Analyseketten zur Merkmalsextraktion auf Daten eines einzelnen Umrichters basieren, oder als "zentralisiert" klassifiziert, falls die entsprechenden Analyseketten zur Merkmalsextraktion auf Daten mehrerer Umrichter und anderer Signale basieren.

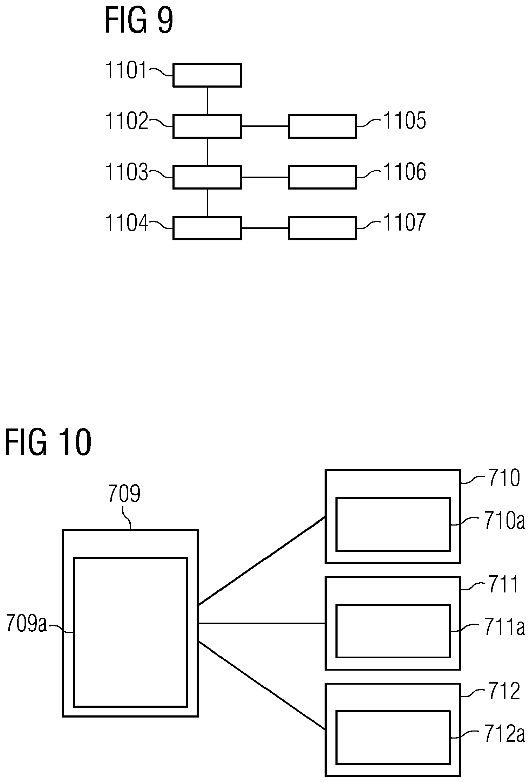

FIG 9 zeigt eine hierarchische Anordnung von Komponenten eines Automatisierungssystems. Die Komponenten umfassen eine speicherprogrammierbare Steuerung 1101, einen Umrichter 1102, einen ersten Sensor 1105, einen Motor 1103, einen zweiten Sensor 1106, ein Band 1104 und eine Kippvorrichtung 1107 und sind anhand ihrer Abhängigkeit und Verknüpfung hierarchisch angeordnet. Der speicherprogrammierbaren Steuerung 1101 sind ein erster und ein zweiter Anwendungsfall zugeordnet. Dem Umrichter 1102 ist ein dritter Anwendungsfall zugeordnet. Dem Motor sind ein vierter, ein fünfter und ein sechster Anwendungsfall zugeordnet. Dem Band ist ein siebter Anwendungsfall und dem Tilter einen achter Anwendungsfall zugeordnet.

**Tabelle 1**

| | Anwendungsfall | Ähnlichkeit mit Anwendungsfall Nr. | | | | | | | |
|---|---|---|---|---|---|---|---|---|---|
| | | 1 | 2 | 3 | 4 | 5 | 6 | 7 | 8 |
| PLC | 1 | 1 | | | | | | | |
| | 2 | 4 | 1 | | | | | | |
| Umrichter | 3 | 5 | 6 | 1 | | | | | |
| Motor | 4 | 4 | 4 | 37 | 1 | | | | |
| | 5 | 145 | 5 | 26546 | 256 | 1 | | | |
| | 6 | 5 | 4 | 3 | 1 | 4 | 1 | | |
| Band | 7 | 145 | 6 | 78 | 7969546 | 45 | 3 | 1 | |
| Tilter | 8 | 4 | 5 | 7 | 78 | 890 | 0 | 0 | 1 |

In Tabelle 1 sind beispielhafte ermittelte Ähnlichkeitswerte angegeben, welche die Ähnlichkeit zwischen verschiedenen Anwendungsfällen quantifizieren. Die Ähnlichkeitswerte werden anhand eines Vergleichs der für die Anwendungsfälle ermittelten Klassifikationsparameter ermittelt. Anhand der ermittelten Ähnlichkeiten können die Anwendungsfälle gruppiert werden, d.h. in Cluster eingeteilt werden. Beispielsweise haben die fünften, siebten und achten Anwendungsfälle gleiche Ähnlichkeitswerte wie die ersten, zweiten, dritten und vierten Anwendungsfälle. Weiter können die Anwendungsfälle anhand eines Entscheidungsbaums ausgewertet werden. Beispielsweise kann ermittelt werden, dass der erste Anwendungsfall ähnlich zu den fünften und siebten Anwendungsfällen ist, während der zweite Anwendungsfall ähnlich zu den dritten und siebten Anwendungsfällen ist.

FIG 10 zeigt eine Illustration eines Vergleichs eines neuen Anwendungsfalls 709 mit bereits bestehenden Anwendungsfällen 710, 711, 712. Den Anwendungsfällen 709-712 sind entsprechende Werte 709a, 710a, 711a, 712a für Klassifikationsparameter zugeordnet.

Für den ersten bereits bestehenden Anwendungsfall 710 ist einer Bewertungsgröße für eine erste Analysekette zur Merkmalsextraktion ein Wert 0 zugeordnet. Einer Bewertungsgröße für eine zweite Analysekette zur Merkmalsextraktion ist ein Wert 0,4 zugeordnet. Weiter ist dem ersten bereits bestehenden Anwendungsfall 710 für einen Signaltyp der Wert "Drehmoment" zugeordnet, für einen Merkmalswert der Wert F1 = 1, und für einen Gerätetyp der Wert "Pumpe".

Für den zweiten bereits bestehenden Anwendungsfall 711 ist der Bewertungsgröße für die erste Analysekette zur Merkmalsextraktion ein Wert 0,2 zugeordnet. Der Bewertungsgröße für die zweite Analysekette zur Merkmalsextraktion ist ein Wert 0,3 zugeordnet. Weiter ist dem zweiten bereits bestehenden Anwendungsfall 711 für einen Signaltyp der Wert "Strom" zugeordnet, für einen Merkmalswert der Wert F1 = 0, und für einen Gerätetyp der Wert "Band".

Für den dritten bereits bestehenden Anwendungsfall 712 ist der Bewertungsgröße für die erste Analysekette zur Merkmalsextraktion ein Wert 0,23 zugeordnet. Der Bewertungsgröße für die zweite Analysekette zur Merkmalsextraktion ist ein Wert 0,35 zugeordnet. Weiter ist dem dritten bereits bestehenden Anwendungsfall 712 für einen Signaltyp der Wert "Strom" zugeordnet, für einen Merkmalswert der Wert F1 = 0, und für einen Gerätetyp der Wert "Motor".

Für den neuen Anwendungsfall 709 ist die Bewertungszahl für die erste Analysekette zur Merkmalsextraktion und die Bewertungszahl für die zweite Analysekette zur Merkmalsextraktion anfänglich unbekannt. Dem neuen Anwendungsfall 709 ist für einen Signaltyp der Wert "Strom" zugeordnet, für einen Merkmalswert der Wert F1 = 0, und für einen Gerätetyp der Wert "Band".

Anhand eines Vergleichs der Klassifikationsparameter "Signaltyp", "Merkmalswert" und "Gerätetyp" ermittelt die Recheneinheit 3 einen Ähnlichkeitswert von 0,2 zwischen dem neuen Anwendungsfall 709 und dem ersten bereits bekannten Anwendungsfall 710, einen Ähnlichkeitswert von 0,6 zwischen dem neuen Anwendungsfall 709 und dem zweiten bereits bekannten Anwendungsfall 711, und einen Ähnlichkeitswert von 0,8 zwischen dem neuen Anwendungsfall 709 und dem dritten bereits bekannten Anwendungsfall 712.

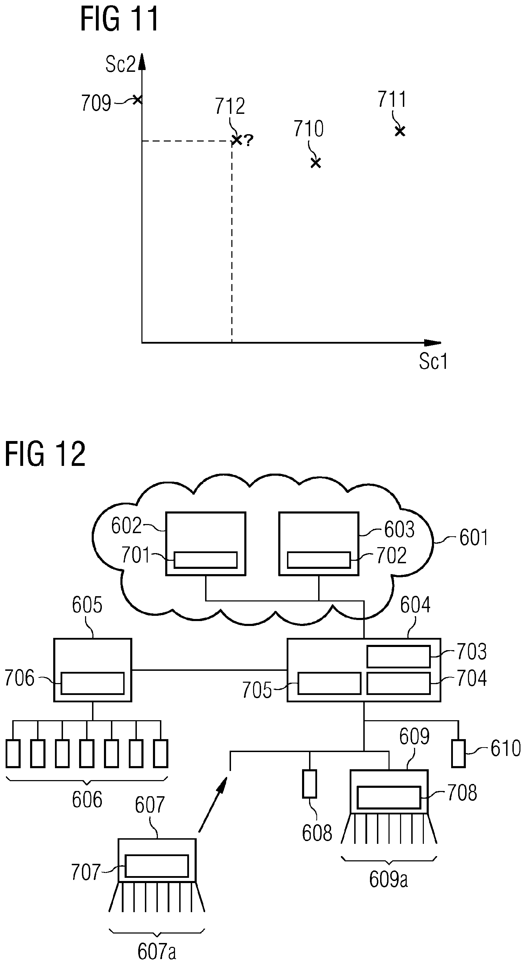

FIG 11 zeigt eine Einordnung eines Anwendungsfalls anhand der entsprechenden Bewertungsgrößen für die zwei Analyseketten. Die Bewertungsgrößen (Scores) Sc1, Sc2 für die erste Analysekette zur Merkmalsextraktion und die zweite Analysekette zur Merkmalsextraktion sind für den ersten bereits bekannten Anwendungsfall 710, den zweiten bereits bekannten Anwendungsfall 711 und den dritten bereits bekannten Anwendungsfall 712 bekannt. Die entsprechenden Bewertungsgrößen Sc1, Sc2 für den neuen Anwendungsfall 709 werden unter Berücksichtigung der ermittelten Ähnlichkeitswerte berechnet.

In Tabelle 2 sind die Bewertungsgrößen und die ermittelten Ähnlichkeitswerte eingetragen. Die Bewertungsgrößen für den neuen Anwendungsfall 709 können beispielweise mittels Kosinusähnlichkeit oder anhand ähnlicher Verfahren bestimmt werden. Beispielweise kann sich für die Bewertungsgröße Sc1 des neuen Anwendungsfalls 709 bezüglich der ersten Analysekette zur Merkmalsextraktion ein Wert von 0,31 und bezüglich der zweiten Analyseketten zur Merkmalsextraktion ein Wert von 0,36 ergeben. Die Bewertungsgrößen Sc1, Sc2 entsprechen der Verbesserung der Genauigkeit der Analyse unter Verwendung der Analysekette zur Merkmalsextraktion bei dem neuen Anwendungsfall.

Analyseketten zur Merkmalsextraktion, welche bei einem Anwendungsfall nicht verwendet werden können, da sie etwa auf der entsprechenden Hierarchieebene nicht verfügbar sind, wird eine Bewertungsgröße von 0 zugeordnet.

**Tabelle 2**

| | | | Anwendungsfall 1 | Anwendungsfall 2 | Anwendungsfall 3 |
|---|---|---|---|---|---|
| Anwendungsfall 1 | Bewertungsgröße Analysekette 1 | 0 | 1 | 0 | 0 |
| | Bewertungsgröße Analysekette 2 | 0.4 | | | |
| | ... | ... | | | |
| Anwendungsfall 2 | Bewertungsgröße Analysekette 1 | 0.2 | 0 | 1 | 0 |
| | Bewertungsgröße Analysekette 2 | 0.3 | | | |
| | ... | ... | | | |
| Anwendungsfall 3 | Bewertungsgröße Analysekette 1 | 0.3 | 0 | 0 | 1 |
| | Bewertungsgröße Analysekette 2 | 0.35 | | | |
| | ... | ... | | | |
| Schätzung für neuen Anwendungsfall | | | | | |
| neuer Anwendungsfall | Bewertungsgröße Analysekette 1 | ... | 0.2 | 0.6 | 0.8 |
| | Bewertungsgröße Analysekette 2 | ... | | | |

Die Reihenfolge der Anwendung der Analyseketten zur Merkmalsextraktion wird anhand der ermittelten Bewertungsgrößen festgelegt. Somit wählt die Recheneinheit 3 zunächst diejenigen Analyseketten zur Merkmalsextraktion aus, welche die höchste Bewertungsgröße aufweisen. Weiter kann die Recheneinheit 3 auch zunächst diejenige Analysekette zur Merkmalsextraktion auswählen, welche für den bereits bestehenden Anwendungsfall mit dem höchsten Ähnlichkeitswert die höchste Bewertungsgröße aufweist. Die nachfolgenden Analyseketten zur Merkmalsextraktion werden in der Reihenfolge der Ähnlichkeitswerte und Bewertungsgrößen ausgewählt.

Falls ein neuer Anwendungsfall als hinreichend ähnlich zu einem bereits bestehenden Anwendungsfall klassifiziert wird, d.h. falls der Ähnlichkeitswerte größer als ein vorgegebener Schwellenwert von beispielsweise 90 Prozent ist, werden die Bewertungsgrößen für die Analyseketten zur Merkmalsextraktion für einen neuen kombinierten Anwendungsfall anhand von historischen Daten der bereits bestehenden Anwendungsfälle und anhand von Daten des neuen Anwendungsfalls generiert.

FIG 12 zeigt das in FIG 7 illustrierte Automatisierungssystem, wobei der erste Umrichter 607 neu hinzugefügt werden soll. In dem Automatisierungssystem sind die historischen Datenbanken, d.h. die Daten der Anwendungsfälle, in einem jeweiligen Speicher der Komponenten 602 bis 609 abgelegt. Falls eine Komponente, etwa der erste Umrichter 607 dem Automatisierungssystem neu hinzugefügt wird oder von dem Automatisierungssystem entfernt wird, wird das historische Wissen, d.h. die Daten der Anwendungsfälle, aktualisiert. Die Aktualisierung erfolgt automatisch, ohne dass manuelles Eingreifen erforderlich wäre. Insbesondere werden die Ähnlichkeitswerte und/oder die Bewertungsgrößen automatisch bestimmt. Die Daten des neuen Anwendungsfalls, welcher einer neu hinzugefügten Komponente entspricht, können entweder zu den Daten der bereits bekannten Anwendungsfälle hinzugefügt werden oder mit den Daten mindestens eines bekannten Anwendungsfalls kombiniert werden.

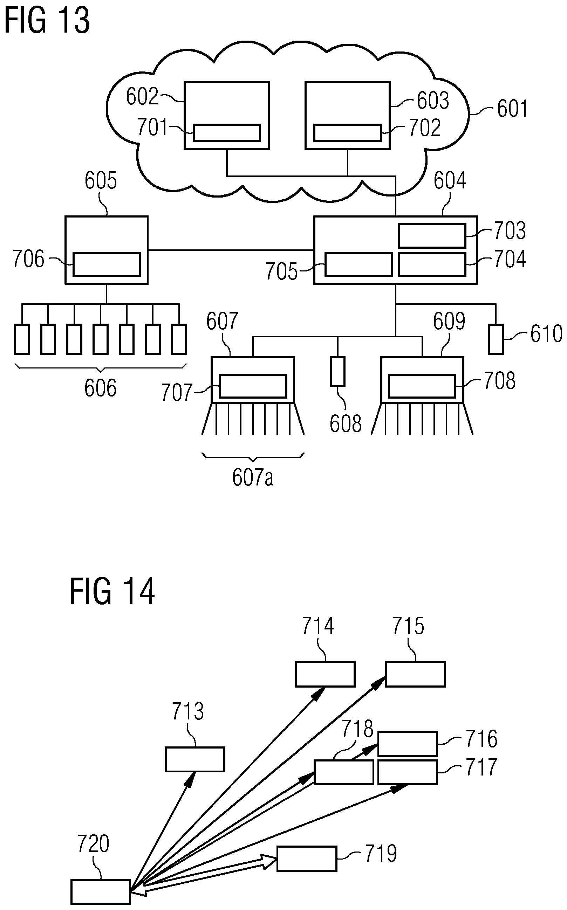

FIG 13 zeigt eine schematische Darstellung des in FIG 12 illustrierten Automatisierungssystems nach dem Hinzufügen des neuen Geräts 607.

FIG 14 zeigt ein Ähnlichkeitsvergleich eines neuen Anwendungsfalls 720 mit bereits bestehenden Anwendungsfällen 713-719. In diesem Fall wird ermittelt, dass der neu hinzuzufügende Anwendungsfall 720 zu einem bestimmten Anwendungsfall 719 der bereits bestehenden Anwendungsfälle eine höchste Ähnlichkeit aufweist, was die Recheneinheit 3 anhand der berechneten Ähnlichkeitswerte ermittelt.

Zum Kombinieren der beiden Anwendungsfälle 719, 720 überprüft die Recheneinheit 3 zuerst, ob die Anwendungsfälle eine identische Eingabe- oder Ausgabestruktur aufweisen. Insbesondere kann die Recheneinheit 3 überprüfen, ob die Klassifikationsparameter für beide Anwendungsfälle 719, 720 gleich sind, wobei die Werte der Klassifikationsparameter unterschiedlich sein können. Ist dies der Fall, kombiniert die Recheneinheit 3 die Anwendungsfälle 719, 720 und bildet gegebenenfalls Obermengen der jeweiligen Werte der Klassifikationsparameter.

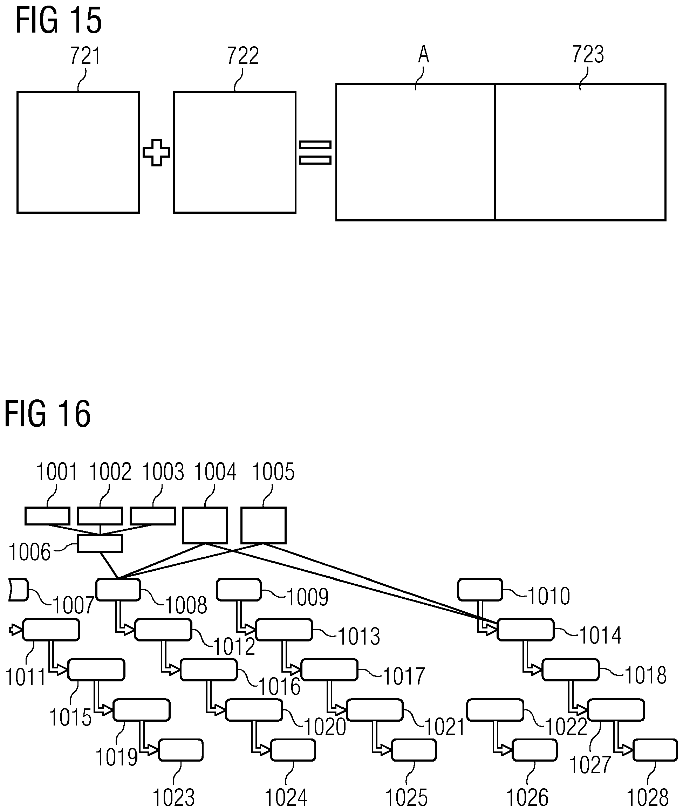

FIG 15 zeigt eine schematische Illustration einer Kombination eines neuen Anwendungsfalls 721 mit einem bestehenden Anwendungsfall 722 zu einem kombinierten Anwendungsfall 723 mithilfe eines Adapters A. Die Verwendung eines Adapters A kann erforderlich sein, falls die Eingabe- und/oder Ausgabestruktur der Anwendungsfälle 721, 722 unterschiedlich ist. Beispielsweise können Signalverläufe mittels des Adapters A durch Skalieren und Verschieben um einen Offset in ihrer Struktur derartig in Übereinstimmung gebracht werden, dass diese kombiniert werden können. Signaltypen können mittels des Adapters A durch Bilden von geeigneten Untermengen kombiniert werden, wozu Training, Validierungsverfahren und eine Korrelationsanalyse durchgeführt werden können. Die möglichen Analyseketten zur Merkmalsextraktion können durch Identifizierung neuer Analyseketten einer Obermenge erfolgen. Der kombinierte Zentralisierungsgrad kann durch Auswahl einer Ablaufplattform (englisch: Execution Platform) basierend auf einer kombinierten Performanzmatrix erfolgen, wobei Performanzindikatoren anhand einer Ausführungszeit und/oder freien Kapazität bestimmt werden können. Gerätebeschreibungen können anhand von hierarchischen zentralen Keywords-Sammlungen kombiniert werden, mit welchen neue abstrakte Beschreibungen von Anwendungsfällen erzeugt werden können.

FIG 16 zeigt hierzu eine schematische hierarchische Anordnung von Komponenten 1001 bis 1028 eines Automatisierungssystems. Die Komponenten 1001 bis 1028 sind hierarchisch angeordnet. Die Gerätebeschreibung wird anhand einer Hierarchieposition der Komponenten 1001 bis 1028, welche den zu kombinierenden Anwendungsfällen 721, 722 zugeordnet sind, kombiniert.

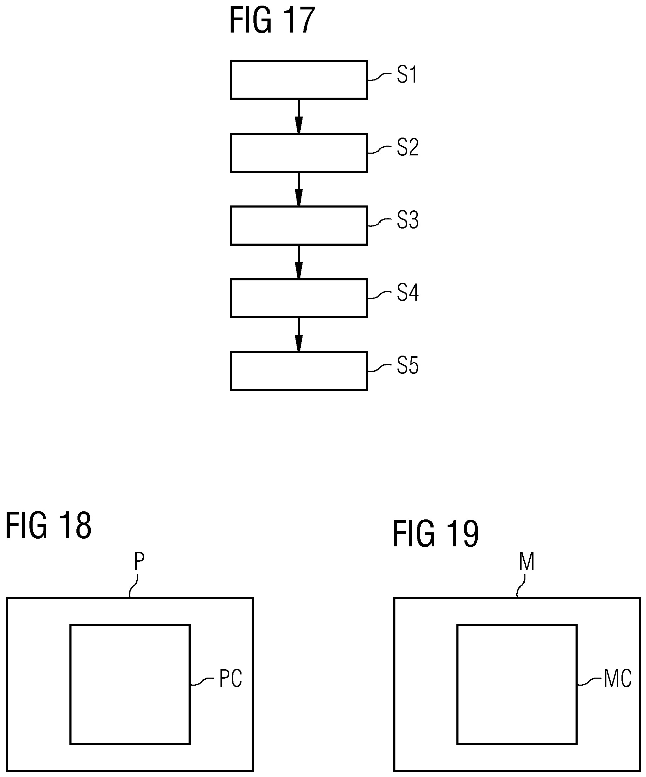

FIG 17 zeigt ein Flussdiagramm eines computerimplementierten Verfahrens zur automatischen Auswahl von Analyseketten zur Merkmalsextraktion gemäß einer Ausführungsform der Erfindung.

In einem ersten Verfahrensschritt S1 wird eine Vielzahl von Anwendungsfällen bereitgestellt. Jeder Anwendungsfall kann einer Komponente eines Automatisierungssystems zugeordnet sein. Den Anwendungsfällen sind Werte für Klassifikationsparameter zugeordnet. Weiter sind den Anwendungsfällen Bewertungsgrößen für Analyseketten aus einer Vielzahl von Analyseketten zugeordnet. Mögliche Klassifikationsparameter umfassen einen Zentralisierungsgrad, welcher von einer Stellung eines Geräts des Anwendungsfalls in einer Automatisierungshierarchie abhängt, eine Merkmalsbewertungszahl, einen Signaltyp von Signalen des Anwendungsfalls und eine Gerätebeschreibung eines Geräts des Anwendungsfalls. Jedem Anwendungsfall kann für einen oder mehrere dieser Klassifikationsparameter ein Wert zugeordnet sein.

Ein neuer Anwendungsfall kann auftreten, falls eine neue Komponente dem Automatisierungssystem hinzugefügt wird. In einem Verfahrensschritt S2 werden für den neuen Anwendungsfall, welcher der neu hinzugefügten Komponente entspricht, Werte für Klassifikationsparameter ermittelt. Die Werte der Klassifikationsparameter können teilweise durch die Spezifikationen des neu hinzuzufügenden Gerätes bereits festgelegt sein. Insbesondere kann ein Signaltyp oder eine Gerätebeschreibung durch die Art des hinzuzufügenden Geräts, etwa eines Umrichters, festgelegt sein.

Weitere Klassifikationsparameter, etwa ein Zentralisierungsgrad, kann von einer Recheneinheit 3 anhand der Position in der Hierarchie, an welcher das neue Gerät hinzugefügt wird, bestimmt werden.

Weitere Klassifikationsparameter, etwa Bewertungsgrößen für Analyseketten zur Merkmalsextraktion, können für den neuen Anwendungsfall anhand der Bewertungsgrößen für die bereits bestehenden Anwendungsfälle berechnet werden.

In einem Verfahrensschritt S3 wird eine Ähnlichkeit des neuen Anwendungsfalls mit den bereits bestehenden Anwendungsfällen durchgeführt, indem jeweils Ähnlichkeitswerte berechnet werden, welche die Ähnlichkeit zwischen dem neu hinzuzufügenden Anwendungsfall mit einem der bereits bestehenden Anwendungsfällen quantifizieren. Die Berechnung der Ähnlichkeitswerte erfolgt anhand eines Vergleichs der Werte für die Klassifikationsparameter, welche den Anwendungsfällen zugeordnet sind.

In einem weiteren Verfahrensschritt S4 wird aus der Vielzahl von Analyseketten mindestens eine Analysekette ausgewählt, wobei die Auswahl anhand der ermittelten Ähnlichkeit des neuen Anwendungsfalls mit den bereits bestehenden Anwendungsfällen und anhand der Bewertungsgrößen für die Analyseketten, welche den Anwendungsfällen der Vielzahl von Anwendungsfällen zugeordnet sind, erfolgt. So kann zunächst derjenige Anwendungsfall ausgewählt werden, welcher die höchste Ähnlichkeit zu dem neuen Anwendungsfall aufweist. Anschließend wird zuerst diejenige Analysekette zur Merkmalsextraktion ausgewählt, welche die höchste Bewertungsgröße aufweist. Anschließend werden die weiteren Analyseketten in der Reihenfolge der Bewertungsgrößen ausgewählt.

Gemäß einigen Ausführungsformen kann nur eine einzelne Analysekette aus der Vielzahl der Analyseketten zur Merkmalsextraktion ausgewählt werden. Es kann jedoch auch vorgesehen sein, eine Vielzahl von Analyseketten auszuwählen.

In einem weiteren Verfahrensschritt S5 kann vorgesehen sein, die Anwendungsfälle anhand des neuen Anwendungsfalls zu aktualisieren. Insbesondere kann der neue Anwendungsfall zu den Anwendungsfällen hinzugefügt werden, falls die Ähnlichkeit des neuen Anwendungsfalls mit den Anwendungsfällen der Vielzahl von Anwendungsfällen ein vorgegebenes Ähnlichkeitskriterium nicht erfüllt. Dies kann etwa der Fall sein, falls die Ähnlichkeitswerte zwischen dem neu hinzuzufügenden Anwendungsfall und den bereits bestehenden Anwendungsfällen jeweils kleiner als ein vorgegebener Wert sind.

Ist mindestens ein Ähnlichkeitswert zwischen dem neu hinzuzufügenden Anwendungsfall und einem bereits bestehenden Anwendungsfall kleiner als der vorgegebene Wert, kann vorgesehen sein, den neu hinzuzufügenden Anwendungsfall mit dem bereits bestehenden Anwendungsfall zu kombinieren. Hierzu kann ein Adapter A verwendet werden, mittels welchem Klassifikationsparameter eines zusammengeführten Anwendungsfalls anhand der Klassifikationsparameter des neuen Anwendungsfalls und anhand der Klassifikationsparameter des mindestens einen Anwendungsfalls der Vielzahl von Anwendungsfällen erzeugt werden. Für den zusammengeführten Anwendungsfall können den Klassifikationsparametern durch Bilden einer Obermenge Werte zugeordnet werden.

Die Anwendungsfälle können zunächst teilweise dezentral verteilt gespeichert sein. Es kann jedoch auch vorgesehen sein, sämtliche Anwendungsfälle zentral zu speichern.

FIG 18 zeigt ein schematisches Blockdiagramm eines Computerprogrammprodukts P mit ausführbarem Programmcode PC. Der ausführbare Programmcode PC ist dazu ausgebildet, beim Ausführen auf einem Computer das oben beschriebene Verfahren durchzuführen.

FIG 19 zeigt ein schematisches Blockdiagramm eines nichtflüchtigen, computerlesbaren Speichermediums M mit ausführbarem Programmcode MC, dazu ausgebildet, beim Ausführen auf einem Computer das oben beschriebene Verfahren durchzuführen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Computerimplementiertes Verfahren zur automatischen Auswahl von Analyseketten (4a-4e) zur Merkmalsextraktion, mit den Schritten:
Bereitstellen (S1) von einer Vielzahl von Anwendungsfällen (701-723), wobei den Anwendungsfällen (701-723) Werte für Klassifikationsparameter zugeordnet sind, und wobei den Anwendungsfällen (701-723) Bewertungsgrößen für Analyseketten (4a-4e) aus einer Vielzahl von Analyseketten (4a-4e) zugeordnet sind;
Ermitteln (S2) von Werten für Klassifikationsparameter für einen neuen Anwendungsfall (701-723);
Ermitteln (S3) einer Ähnlichkeit des neuen Anwendungsfalls (701-723) mit den Anwendungsfällen (701-723) der Vielzahl von Anwendungsfällen (701-723) anhand eines Vergleichs der für den neuen Anwendungsfall (701-723) ermittelten Werte der Klassifikationsparameter mit den Werten der Klassifikationsparameter, welche den Anwendungsfällen (701-723) der Vielzahl von Anwendungsfällen (701-723) zugeordnet sind; und
Auswählen (S4) einer Analysekette (4a-4e) aus der Vielzahl von Analyseketten (4a-4e) anhand der ermittelten Ähnlichkeit des neuen Anwendungsfalls (701-723) mit den Anwendungsfällen (701-723) der Vielzahl von Anwendungsfällen (701-723) und anhand der Bewertungsgrößen für die Analyseketten (4a-4e), welche den Anwendungsfällen (701-723) der Vielzahl von Anwendungsfällen (701-723) zugeordnet sind.

2. Verfahren nach Anspruch 1, wobei die Vielzahl von Anwendungsfällen (701-723) anhand des neuen Anwendungsfalls (701-723) aktualisiert wird.

3. Verfahren nach Anspruch 2, wobei der neue Anwendungsfall (701-723) zu der Vielzahl von Anwendungsfällen (701-723) hinzugefügt wird, falls die Ähnlichkeit des neuen Anwendungsfalls (701-723) mit den Anwendungsfällen (701-723) der Vielzahl von Anwendungsfällen (701-723) ein vorgegebenes Ähnlichkeitskriterium nicht erfüllt.

4. Verfahren nach Anspruch 2 oder 3, wobei der neue Anwendungsfall (701-723) mit mindestens einem Anwendungsfall (701-723) der Vielzahl von Anwendungsfällen (701-723) zusammengeführt wird, falls die Ähnlichkeit des neuen Anwendungsfalls (701-723) mit dem mindestens einen Anwendungsfall (701-723) der Vielzahl von Anwendungsfällen (701-723) ein vorgegebenes Ähnlichkeitskriterium erfüllt.

5. Verfahren nach Anspruch 4, wobei das Zusammenführen des neuen Anwendungsfalls (701-723) mit dem mindestens einen Anwendungsfall (701-723) der Vielzahl von Anwendungsfällen (701-723) unter Verwendung eines Adapters (A) erfolgt, mittels welchem Klassifikationsparameter eines zusammengeführten Anwendungsfalls (701-723) anhand der Klassifikationsparameter des neuen Anwendungsfalls (701-723) und anhand der Klassifikationsparameter des mindestens einen Anwendungsfalls (701-723) der Vielzahl von Anwendungsfällen (701-723) erzeugt werden.

6. Verfahren nach einem der vorangehenden Ansprüche, wobei die Anwendungsfälle (701-723) der Vielzahl von Anwendungsfällen (701-723) dezentral verteilt gespeichert sind.

7. Verfahren nach einem der vorangehenden Ansprüche, wobei die Klassifikationsparameter einen Zentralisierungsgrad umfassen, welcher von einer Stellung eines Geräts (601-610) des Anwendungsfalls in einer Automatisierungshierarchie abhängt.

8. Verfahren nach einem der vorangehenden Ansprüche, wobei die Klassifikationsparameter eine Merkmalsbewertungszahl umfassen.

9. Verfahren nach einem der vorangehenden Ansprüche, wobei die Klassifikationsparameter einen Signaltyp von Signalen des Anwendungsfalls (701-723) umfassen.

10. Verfahren nach einem der vorangehenden Ansprüche, wobei die Klassifikationsparameter eine Gerätebeschreibung eines Geräts (601-610) des Anwendungsfalls (701-723) umfassen.

11. Verfahren nach einem der vorangehenden Ansprüche, wobei der neue Anwendungsfall (701-723) ein zu einem Automatisierungssystem hinzugefügtes oder hinzuzufügendes Gerät (601-610) betrifft.

12. Verfahren nach Anspruch 11, wobei das zu dem Automatisierungssystem hinzugefügte oder hinzuzufügende Gerät (604, 607, 609) ein Umrichter (604, 607, 609) ist.

13. System (1) zur automatischen Auswahl von Analyseketten (4a-4e) zur Merkmalsextraktion, mit:
einer Schnittstelle (2) zum Bereitstellen von einer Vielzahl von Anwendungsfällen (701-723), wobei den Anwendungsfällen (701-723) Werte für Klassifikationsparameter zugeordnet sind, und wobei den Anwendungsfällen (701-723) Bewertungsgrößen für Analyseketten (4a-4e) aus einer Vielzahl von Analyseketten (4a-4e) zugeordnet sind; und
einer Recheneinheit (3), welche dazu ausgebildet ist:
- Werte für Klassifikationsparameter für einen neuen Anwendungsfall (701-723) zu ermitteln;
- eine Ähnlichkeit des neuen Anwendungsfalls (701-723) mit den Anwendungsfällen (701-723) der Vielzahl von Anwendungsfällen (701-723) zu ermitteln, anhand eines Vergleichs der für den neuen Anwendungsfall (701-723) ermittelten Werte der Klassifikationsparameter mit den Werten der Klassifikationsparameter, welche den Anwendungsfällen (701-723) der Vielzahl von Anwendungsfällen (701-723) zugeordnet sind; und
- eine Analysekette (4a-4e) aus der Vielzahl von Analyseketten (4a-4e) auszuwählen, anhand der ermittelten Ähnlichkeit des neuen Anwendungsfalls (701-723) mit den Anwendungsfällen (701-723) der Vielzahl von Anwendungsfällen (701-723) und anhand der Bewertungsgrößen für die Analyseketten (4a-4e), welche den Anwendungsfällen (701-723) der Vielzahl von Anwendungsfällen (701-723) zugeordnet sind.

14. Computerprogrammprodukt mit ausführbarem Programmcode, dazu ausgebildet, beim Ausführen auf einem Computer das Verfahren gemäß einem der Ansprüche 1 bis 12 auszuführen.

15. Nichtflüchtiges, computerlesbares Speichermedium mit ausführbarem Programmcode, dazu ausgebildet, beim Ausführen auf einem Computer das Verfahren gemäß einem der Ansprüche 1 bis 12 auszuführen.
